# EUROPEAN PATENT APPLICATION

(11) **EP 1 764 546 A1**
(43) Date of publication of application: **21.03.2007**
(21) Application number: 06254866.4
(22) Date of filing: 20.09.2006
(51) Int. Cl.: F21V 1/00, F21V 9/12

(54) **Lamp surround**

(30) Priority: 20.09.2005 GB 0519176
(71) Applicant: Kemp, Stewart, Brighton East Sussex BN1 5BF (GB)
(72) Inventor: Kemp, Stewart, Brighton East Sussex BN1 5BF (GB)
(74) Representative: Booth, Catherine Louise

(57) **Abstract**

A lamp and a lamp surround are disclosed. The lamp surround comprises a frame which preferably comprises two carousels (2,4). A plurality of enclosures, such as glass test tubes (30,31) are retained by the frame (2,4). The enclosures (30,31) have means at the upper end (34), such as a flange (36), to retain them in appropriate shaped and sized segments (12) in the upper carousel (2). The enclosures (30,31) have accessible interiors such that they are suitable for receiving a filling.

## Description

The present invention relates to a lamp or lighting device and in particular to a surround for at least partially surrounding a light source in a lamp or lighting device.

According to the present invention from a broad aspect, there is provided a light surround for a lighting device, the light surround comprising a frame and a plurality of enclosures retained by said frame, wherein said frame is adapted to at least partially surround a light source of a lighting device, and wherein each said enclosure is at least partially transparent and has an accessible interior that is suitable for receiving a filling.

The above light surround is adapted for use with a lighting device and therefore, from a further broad aspect, in accordance with the present invention there is provided a lighting device comprising a light source and a light surround at least partially surrounding the light source and comprising at least one enclosure, said enclosure having an accessible interior, wherein said enclosure is at least partially transparent and is suitable for receiving a filling, and wherein said light surround is at least partially removable from the lighting device.

Thus in accordance with the present invention a lighting device and a light surround with improved adaptability with regard to its functionality and environment is provided.

The lighting device comprises a light source, such as a light bulb, candle or the like and the surround or shade to partially diffuse and/or reflect the light from the light source into the area to be lit. The light source can be fixed relative to the environment, such as a wall lights or ceiling suspended light, or can be moveable, such as a lamp, table light and the like.

Light surrounds are typically selected for a particular light source based upon their size, shape, ability to diffuse or reflect light and their appearance. In particular, it is often necessary to select a light surround based on its compatibility with, and ability to enhance or complement, the appearance of the room in which the lighting device is situated. The lighting device and light surround of the present invention are advantageous because they can be altered or adapted to suit any environment and so if for example a room is re-decorated or if the lighting device or light surround is moved to a different room, it can simply be adapted for use in the new environment. If the light surround diffuses or reflects an inappropriate amount of light or is unsuitable in appearance for its new environment, it can be changed as desired. Cleaning or inspecting the light surround of the present invention can be easier and less time consuming compared with known lampshades and the like because the light surround is at least partially removable from the lighting device.

As discussed above, the light surround of the present invention readily lends itself to alteration or adaptation. For example, if it is desired to reduce the amount of light transmitted through the light surround, a suitable filling which is less transparent than the material comprising the enclosures can be placed in one or more of the enclosures, thereby preventing at least a proportion of the light that would have passed through the enclosures from being transmitted through the enclosures. If it is desired to change another aspect of the light, for example if a red light is required to, say, prevent damage to light sensitive material in the environment, then the enclosures can be filled with a suitable coloured filling, such as photographic gel. Furthermore, the light surround can be adapted to complement the room in which the lighting device is to be used by at least partially filling one or more of the enclosures with a suitable coloured and/or shaped and/or textured material or object. Indeed any suitably sized objects can be placed in any of the enclosures including, for example, coloured and/or clear gels, paper, flower petals, plants, sweets, beads, fragranced oils, translucent materials, etc..

The enclosures may be permanently retained by said frame such that they cannot be removed from the frame. Preferably, however at least one of said enclosures is removable from said frame and more preferably all of, or a substantial proportion of, said enclosures are removable, individually or in sets of two or more, from said frame. Having removable enclosures enables them to be interchanged or replaced as desired. For example, if an enclosure is damaged, only that damaged enclosure will require replacing in order to repair the light surround. Furthermore, if the enclosures have been filled to provide a particular lighting effect, for example with a coloured dye or gel to provide a single coloured light, then removing one or more of the enclosures will allow the lighting effect to be readily altered, thus enabling the lighting level to be dimmed or brightened as desired. Furthermore, if it is desired to change the appearance of the light surround, one or more of the enclosures can be swapped or replaced with new enclosures containing different fillings as desired. Still further, having removable enclosures provides a light surround that is easy to clean, since the individual enclosures can be cleaned separately and the frame can be cleaned with the enclosures removed. Having removable enclosures also allows the enclosures to be easily filled or emptied of the filling contained therein.

The frame of the light surround may be permanently affixed to a lighting device that it is adapted to surround. Preferably however, the frame of the light surround is adapted to be removable from a lighting device to which it is attached in use. This provides a light surround that is easy to replace, clean or repair and that can be used with any of a plurality of different lighting devices as desired.

The enclosures can be arranged in relation to the frame of the light surround in any suitable manner. Preferably, the enclosures are substantially vertically aligned within, around, about, on or under said frame such that the access to the enclosure interior is uppermost. More preferably the enclosures are aligned around the outside of the frame, thereby making them easily accessible for cleaning, filling, emptying and/or removing if they are removable.

The enclosures may comprise any suitable, at least partially transparent material. For example, the enclosures may comprise substantially clear or coloured Perspex, nylon or the like. In a particularly preferred embodiment, the enclosures comprise clear glass. This material is particularly suited for transmitting white light and can easily be formed into enclosures having an openings for accessing the interior. In a preferred embodiment of the present invention, one or more of the enclosures comprises translucent material thereby partially diffusing the light from a light source used with the light surround.

The frame of the light surround can be any desired shape and size and can be chosen to complement and fit around the light source and lighting device with which it is desired to be used. For example, the frame can comprise one or more sheets of material and can have any shape desired, such as a generally regular shape (circular, trefoil shaped, square, triangular, pentagonal, hexagonal, etc.) or any irregular shape. In a particularly preferred embodiment, the frame is substantially cylindrical. Preferably the enclosures are aligned substantially vertically about the circumference of the frame such that said enclosures are arranged in a substantially circular array and the major axis of each enclosure is substantially parallel with the central axis of the substantially cylindrical frame. If the enclosure has no axis that is greater than the other axes of the enclosure, then the major axis is defined such that it is parallel with the cylindrical axis when the opening through which the interior of the enclosure is accessed is uppermost. A cylindrical shaped frame provides a surround around which the plurality of enclosures can be evenly spaced and which completely surrounds the light source of a lighting device with which it is used in the lateral direction. Alternatively, the light surround may comprise only a partial surround, for example the surround could be a partial cylinder having a substantially semi-circular cross-section or other suitable partial shape. Such a surround will be more suitable for use with lighting in which the space around the light source may be restricted such as wall mounted lighting and the like.

The frame of the light surround can comprise one or more components. If the frame comprises more than one component, they are preferably affixed together to form the frame. In a particularly preferred embodiment, the frame comprises at least one carousel. This is a particularly advantageous arrangement for the light surround of the present invention because the enclosures can be arranged around the outer edge of the carousel, with the centre of the carousel being sized to allow a light source to be received therein. In a particularly preferred embodiment, the carousel comprises means for attaching said frame to a lighting device. Preferably the carousel further comprises at least one and preferably a plurality of spokes which join the outer rim of the carousel with a central socket for receiving the light source of a lighting device or with joining means for joining the light surround with a lighting device.

The enclosures can be attached to or retained by the carousel by any suitable means. For example, the enclosures can be permanently gripped or enclosed in apertures formed in the rim of the carousel. Preferably however, the carousel comprises means for retaining said enclosures therein, said means comprising segments of the carousel that correspond to a substantial portion of the outer perimeter of each enclosure. When the enclosures are suspended by insertion into the segments, they are prevented from being pulled out of the segments since more than half of the perimeter of the enclosure is surrounded by the material of the carousel, which is preferably metal such as stainless steel, aluminium or the like or plastics etc.. However the enclosures can be removed from the segments by raising them upwards and out of the surrounding segment and can be inserted in the reverse manner. Furthermore, partial segments are simpler to cut from a carousel than entire segments, thereby providing a carousel that is easier to manufacture.

The enclosures can be retained in the segments of the carousel by any suitable means. For example, the enclosures can be permanently bonded to the carousel or they can be retained in the segments by gripping means, such as a rubber sleeve or the like. Preferably, however, the enclosures comprise a flange at the upper open end thereof, said flange for retaining said enclosures in said segments of said carousel. The enclosures can be inserted into the segment and lowered until the flange contacts the parts of the segment surrounded by the carousel material. Thus the enclosures can rest within the carousel and are free to move at their lower, closed ends if desired.

The above embodiment is described in relation to a single carousel, but the features described above may be used with more than one carousel, with the carousels combined to form the frame of the lighting device. In a particularly preferred embodiment, the frame comprises an upper carousel and a lower carousel, said carousels spaced apart by at least one supporting member. This provides a frame in which the enclosures can be supported about both their upper ends and their lower ends, thereby providing a more secure light surround in which the enclosures cannot come into contact with adjacent enclosures.

The enclosures in accordance with the present invention can have any shape and size as desired. For example, the enclosures may comprise elongate tubes having a regular or irregular shape. The enclosures may also have a regular or irregular cross-section and may for example have a polygonal cross-section such as a square or the like. Preferably one or more of the enclosures comprises a substantially cylindrical test tube. This style of tube is particularly useful with the present invention because the enclosed curved base of the tube is easy to empty and clean when it is desired to change the filling and the rim of the test tube provides the flange required for retaining the tube in the carousel if a carousel as discussed above (or a similar retaining means) is used.

The enclosure has an accessible interior therefore it has an opening in a portion thereof. Whilst it can be used in this state, this may allow dirt and dust to enter the enclosure which is undesirable.

Preferably therefore the light surround further comprises closure means for one or more of the enclosures. In a preferred embodiment, the closure means comprises a dome adapted to be received in the opening of the enclosure, preferably a glass dome. This is particularly advantageous in the test tube embodiment, since the dome shape complements the curved, domed base of the test tubes. Domes are shaped such that dust or dirt which would gather on a flat surface, should not gather on such an outwardly curved surface and therefore will not interfere with transmission of light through the glass dome. In an alternative embodiment, the closure means comprises a bung, such as a rubber bung or a glass, bung-shaped means.

The light surround is arranged such that it is suitable for use with a lighting device and therefore, particularly with regard to the one or more carousel embodiments, preferably further comprises joining means such that when said light surround is joined to a lighting device, said light surround is freely rotatable about a light source of the lighting device. This is advantageous because if the light surround contains enclosures that have different fillings, then the lighting effect of the lamp can be readily and easily altered as desired. For example, if, say, about half of the enclosures are opaque and the remaining enclosures are transparent, the amount of light transmitted at a particular location in the environment of the lighting device can be rapidly altered by turning the opaque or transparent enclosures between the light source and the location.

The frame can be adapted to be free to rotate about the lighting device with which it is used by any suitable method or means. For example a ball and socket joint could be provided between the frame and the lighting device or a rotary bearing or a ball race joint could be used. Preferably, however, the joining means comprises a nylon joint, comprising at least one and preferably two nylon bearing surfaces which are substantially free to rotate relative to each other. This provides a simple and easily replaceable joint between the two components of a lighting device. In a particularly preferred embodiment, the joint comprises a nylon sleeve and a copper washer around its base thereby providing electrical contact between the light surround and an earthed lighting device. Whilst it is preferred that rotation of the light surround requires manual operation, in an alternative embodiment of the present invention, rotation of the light surround may be operated by any suitable automating means such as a motor or the like.

As discussed above, the enclosures have accessible interiors to allow the introduction and removal of a filling so that the transmission of light through the tube is affected. Preferably therefore the light surround comprises at least one filling in at least one of the enclosures. Thus the desired lighting effect can be achieved. In a particular embodiment of the invention, the filling comprises photographic gel. This is a particularly advantageous substance for use in the present invention because it is can be substantially transparent or it can be translucent and it can be coloured to whatever colour is desired and furthermore it can be used to completely or partially fill the tube. Still further, photographic gels are resilient and do not readily fade with exposure to light. Still further, one or more different photographic gels can be provided in a single tube without the gels mixing to a substantial degree, or the gel can be provided in sheet form.

As discussed above, the enclosures can be filled with one or more suitable fillings to provide the desired lighting effect. Additionally or alternatively, the enclosures may comprise translucent material, thereby providing a degree of diffusion of the light themselves even if they contain no objects or media. This is advantageous, particularly in conjunction with the embodiment of the invention in which the enclosures are removable because the lighting effect can be altered as desired simply by swapping enclosures having one level of translucence and/or transparency with others having different levels of these properties.

Certain preferred embodiments of the present invention will now be described, by way of example only, with reference to the accompanying drawings, in which:
Figure 1 shows a plan view of an upper carousel for use with the light surround or the lighting device in accordance with an embodiment of the present invention;
Figure 2 shows a plan view of a lower carousel for use with the light surround or the lighting device in accordance with an embodiment of the present invention;
Figure 3 shows a enclosure for use with the light surround or the lighting device in accordance with an embodiment of the present invention;
Figure 4 shows closure means for use with the light surround or the lighting device in accordance with an embodiment of the present invention;
Figure 5 shows the enclosures of Figure 3 having the closure means of Figure 4 inserted therein;
Figure 6 shows the upper and lower carousels of Figures 1 and 2 having a clear enclosure and a partially opaque tube arranged therein;
Figure 7 shows the carousels of Figure 6 with the tubes removed and with supporting means and a light source receiving means in accordance with an embodiment of the present invention;
Figure 8 shows a plan view of another upper carousel for use with the light surround or the lighting device in accordance with an embodiment of the present invention;
Figure 9 shows a plan view of another lower carousel for use with the light surround or the lighting device in accordance with an embodiment of the present invention; and
Figure 10 shows a lighting device in accordance with an embodiment of the present invention.

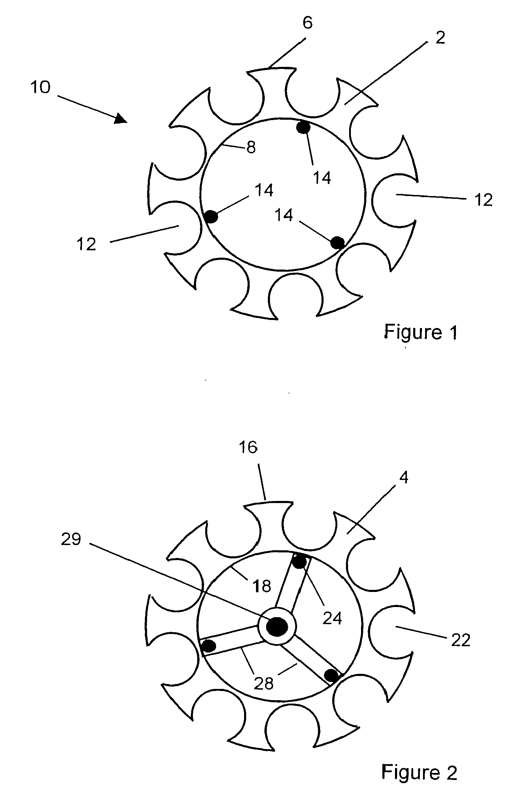

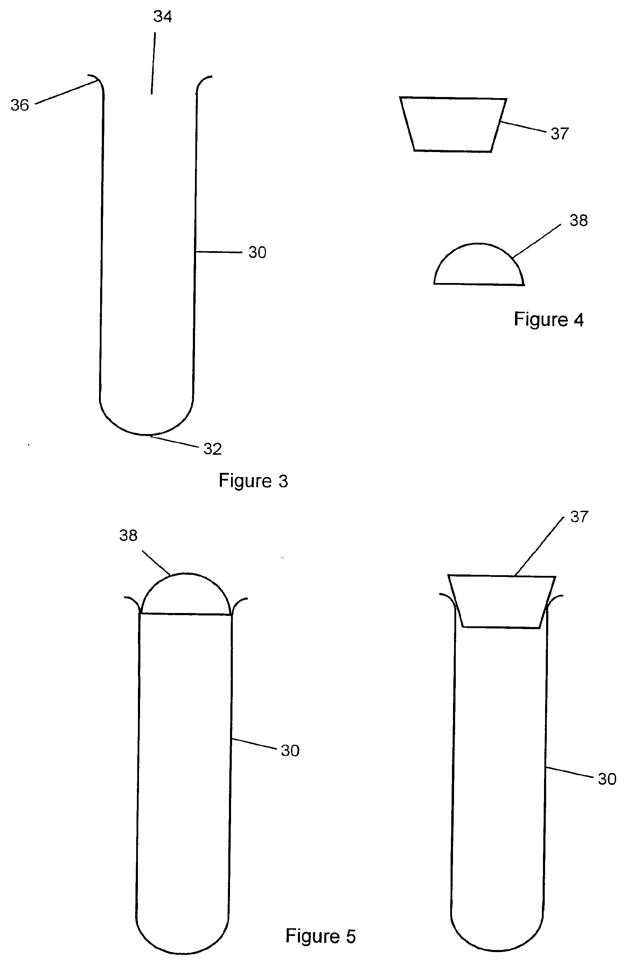

Referring to Figure 1, an upper carousel 2 which, in an embodiment of the invention, forms the frame 10 of a light surround 20, is shown. In this embodiment, the carousel 2 comprises a generally circular ring of suitable material, such as steel. The ring has an outer circumference 6 and an inner circumference 8. Segments 12 are cut from the steel which forms the ring. The carousel can have one or more segments 12 and in this embodiment nine segments are shown. The segments 12 closely correspond in shape and size to a substantial proportion of the outer perimeter of an enclosure 30 (Figures 3 and 5) which can be received in the segments 12. In this embodiment, the enclosure 30 is a test tube. A substantial proportion of the outer perimeter of a test tube 30 is generally more than half of the perimeter for a tube having a generally circular cross-section, thereby preventing the tube 30 from being pulled laterally out of the segment 12. The segment 12 could enclose the entire perimeter of a tube 30 (i.e. the segment 12 could comprise a hole cut through the steel) but for ease of manufacture, partial perimeters are preferred.

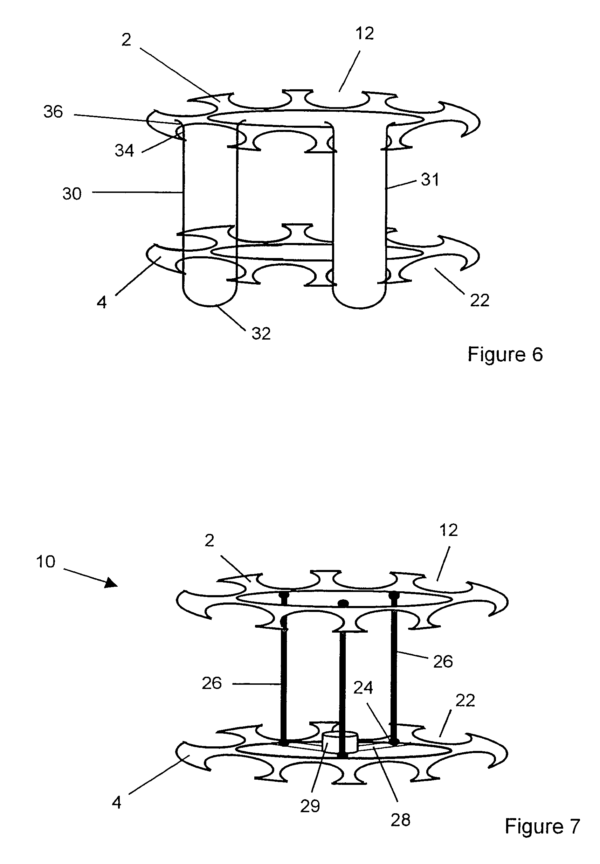

The carousel 2 further comprises three protrusions 14 from the inner circumference 8 toward the centre of the ring. In other embodiments there could be more than or less than three protrusions 14. Each protrusion 14 is suitable for receiving a supporting post 26 (Figure 7) if it is desirable to attach the upper carousel 2 to a lower carousel 4 (Figure 2) or to means for attaching the upper carousel 2 to a light source of a lighting device.

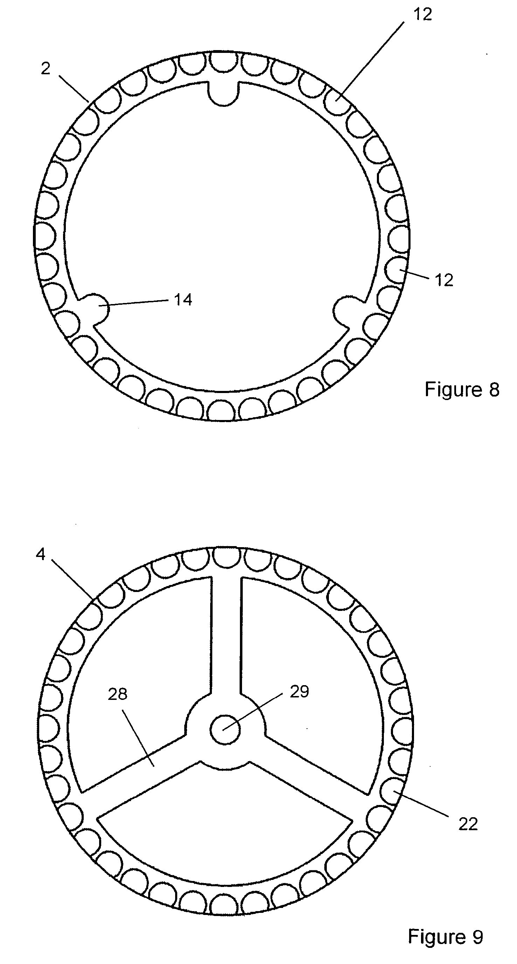

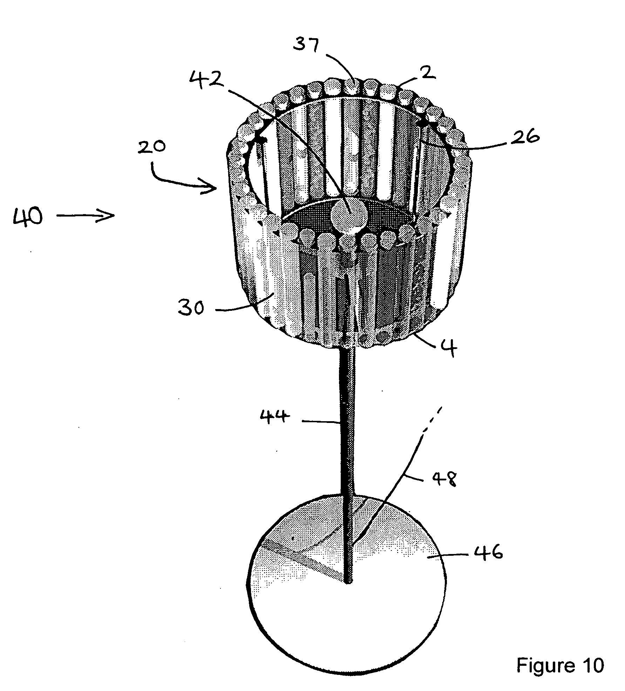

Whilst the upper carousel 2 alone can form the frame 10 of the lighting device, in a preferred embodiment a lower carousel 4 is also used in conjunction with the upper carousel 2. Figure 2 shows a lower carousel 4 in accordance with an embodiment of the present invention. The lower carousel 4 corresponds substantially in shape and size with the upper carousel 2 and has segments 22 cut therefrom which correspond with the segments 12 of the upper carousel 2. In this embodiment, the lower carousel 4 is used to attach the light surround 20 to a lighting device such as a lamp 40 (Figure 10). Thus the lower carousel 4 further comprises, in this embodiment, three spokes 28 which radiate from the centre to the inner circumference 18 of the lower carousel 4. At the centre there is provided a socket 29 for receiving a light source such as a light bulb. Beneath the socket is means for joining the light surround 10 to a lamp or light fixture (not shown). In an alternative embodiment, the socket 29 may be provided on the lamp or light fixture and the centre of the lower carousel 4 may simply comprise a ring or the like for passing over the socket 29 and causing the ring and/or the spokes 28 to rest against a flange suitably arranged on the lamp or light fixture (Figure 9).

The lower carousel 4 further comprises protrusions 24 which correspond with those provided on the upper carousel 2. Supporting posts 26 can be received between the upper and lower protrusions 14, 24 thereby spacing and holding the carousels 2, 4 the desired distance apart. The supporting posts 26 can be received by the protrusions 14, 24 in any suitable manner such as welding the posts 26 to the protrusions 14, 24, or receiving them in suitable sockets provided on the protrusions 14, 24 or the like.

The light surround 20 comprises, in the present embodiment, the pair of carousels 2, 4 spaced apart by supporting posts 26 (Figure 7) and further comprises a plurality of enclosures. In the preferred embodiment the enclosures comprise test tubes as shown in Figure 3. The test tubes comprise blown glass and have a closed base 32 and an open top 34 when the tubes are held vertically. When inserted into a segment 12 of the upper carousel 2, each tube is prevented from passing completely through the carousel 2 by flange 36 at the top 34 of the tube 30 and/or by the tube 30 being at least partially tapered such that it is slightly wider near the tube top 34 than along the rest of the length of the frame of the tube 30.

As shown in Figure 4, the tubes 30 can be provided with means 37, 38 for closing the open top 34 of the tube 30. The means 37 comprises a bung, which can be formed of glass, Perspex, rubber or any other suitable material. The means 38 comprises a solid or hollow dome which can comprise glass or any other suitable material. As shown in Figure 5, these closure means are used to close the open top 34 of the tubes 30, thereby protecting the contents of the tube 30.

One or more of tubes 30 can be inserted into the carousel 2 or carousels 2,4 as shown in Figure 6 to form the light surround 20 (Figure 10 shows multiple tubes in place). The light surround shown in this figure comprises hollow transparent tube 30 and opaque tube 31. Tube 30 is inserted into the light surround 20 by passing the base 32 through a segment 12 of the upper carousel 2 toward the lower carousel 4. The tube is prevented from passing all the way through the opening formed by the segment 12 because flange 36 protrudes from the top 34 of the tube 30 and abuts the material forming the carousel 2 around the segment 12. The tube 30 is sized such that the base 32 passes into a corresponding segment 22 of the lower carousel 4. Thus, in use, the tube is held securely in a vertical alignment and is not free to move laterally and thus cannot contact other tubes in the light surround 20. In alternative arrangements the lower carousel 4 is omitted and therefore the tubes 30 are free to move laterally to some extent. Tube 31 is also inserted in the same manner.

The carousels 2, 4 are spaced apart in order to securely hold the tubes 30, 31. The means for spacing and holding the carousels 2, 4 apart comprises three supporting means 26 which, in this embodiment comprise steel posts that are welded or otherwise secured between the carousels 2, 4. The protrusions 24 on the lower carousel 4 are provided on spokes 28, which join the socket 29 in the centre of the lower carousel 4 to the outer rim. Thus the light surround frame 10 can be connected to a lamp stand, light fixture or the like.

The upper carousel 2 can comprise one or more components secured together. Preferably, however, as shown in Figure 8, the upper carousel 2 comprises a single sheet of material such as steel from which the segments 12 are machined. The protrusions 14 are also formed with the carousel from the same sheet of material. Likewise, the lower carousel 4 can be formed from a single sheet of material as shown in Figure 9. The spokes 28 are formed from the same sheet of material as the ring of the carousel 4 and the socket 29 comprises a hole through the centre of the joint of the three spokes. Therefore in this arrangement the carousel 4 can be placed over an existing electrical socket or an electrical socket for receiving a bulb or the like can be affixed over the hole 29. In this unitary arrangement of the carousel 4 the protrusions 24 are integral with the spokes 28 and the supporting members 26 can be welded directly to the spokes 28. Alternatively, sockets for receiving the supporting members 26 can be affixed to the spokes in the region of the outer rim.

Figure 10 shows an embodiment of the invention in which the light surround 20 is attached to a lighting device that is a lamp 40. A bulb 42 is placed in the socket 29 at the centre of the lower carousel 4. The upper carousel 2 holds a large number of tubes 30 each of which has a closure means 37 to close its top end. The lower carousel 4 supports the base of each tube 30. The lamp 40 further comprises a stand which comprises pole 44 attached to the centre of lower carousel 4 at one end and to a stand base 46 at its other end. The joint between the pole 44 and the lower carousel 4 comprises a concentric pair of nylon sleeves, the outer one surrounding an inner one, the inner one encircling the pole 44 and over which socket 29 of the lower carousel 4 is slotted so that the socket encircles the outer nylon sleeve. Thus the light surround is free to rotate about the light bulb 42 at its centre because the nylon sleeves can move relative to each other. Any appropriate form of joint between the light surround and the lamp stand can be used in accordance with the invention. In an alternative embodiment, the joint comprises a nylon sleeve and a copper washer to provide the ability to rotate and to provide an electrical contact between the carousels and the lamp which is earthed. Electric cable 48 is connected to a power source and provides power to illuminate bulb 42 and consequently the tubes 30 and their contents.

It can be seen from the above that, particularly in its preferred embodiments, the present invention provides a modular light surround and/or lighting device that is easy to modify, repair or adjust as desired.

## Claims

1. A light surround (20) for a lighting device (40), the light surround comprising:
a frame (10); and
a plurality of enclosures (30) retained by said frame,
wherein said frame (10) is adapted to at least partially surround a light source (42) of a lighting device (40), and wherein each said enclosure (30) is at least partially transparent and has an accessible interior that is suitable for receiving a filling.

2. A light surround (20) as claimed in claim 1, further comprising joining means such that when said light surround (20) is joined to a lighting device (40), said light surround is freely rotatable about a light source (42) of the lighting device, said joining means comprising a nylon joint.

3. A lighting device (40) comprising:
a light source (42); and
a light surround (20) at least partially surrounding the light source and comprising a plurality of enclosures (30), wherein:
each said enclosure is at least partially transparent and has an accessible interior such that it is suitable for receiving a filling; and
said light surround (20) is at least partially removable from the lighting device (40).

4. A light surround (20) or lighting device (40) as claimed in any preceding claim, wherein at least one of said enclosures is removable from said light surround (20).

5. A light surround (20) or lighting device (40) as claimed in any preceding claim, wherein at least one of said enclosures (30) comprises substantially clear glass, Perspex, nylon or the like.

6. A light surround (20) or lighting device (40) as claimed in any preceding claim, wherein at least one of said enclosures (30) comprises a substantially cylindrical test tube.

7. A light surround (20) or lighting device (40) as claimed in any preceding claim, further comprising closure means (37, 38) for at least one of the enclosures (30).

8. A light surround (20) or lighting device (40) as claimed in claim 7, wherein said closure means (37, 38) comprise a glass dome (38) adapted to be received in an opening (34) to the accessible interior of the enclosure (30).

9. A light surround (20) or lighting device (40) as claimed in any preceding claim, wherein said frame (10) or said light surround (20) comprises an upper carousel (2) and a lower carousel (4), said carousels spaced apart by at least one supporting member (26).

10. A light surround (20) or lighting device (40) as claimed in any preceding claim, further comprising a filling in at least one of the enclosures (30).
